# EUROPEAN PATENT APPLICATION

(11) **EP 4 707 593 A1**
(43) Date of publication of application: **11.03.2026**
(21) Application number: 24864058.3
(22) Date of filing: 19.04.2024
(51) Int. Cl.: F04B 35/04, F04B 49/06, F04B 49/02, B60S 5/04, H02J 7/00, H02J 7/34, H02J 9/06, B60R 16/033

(54) **INFLATION PUMP APPARATUS AND MULTIFUNCTIONAL DEVICE**

(30) Priority: 15.09.2023 CN 202311203623; 15.09.2023 CN 202311204255; 15.09.2023 CN 202322522175 U; 15.09.2023 CN 202322529063 U
(71) Applicant: Shenzhen Carku Technology Co., Ltd., Shenzhen, Guangdong 518109 (CN)
(72) Inventor: LEI, Yun, Shenzhen, Guangdong 518109 (CN); ZHANG, Zhifeng, Shenzhen, Guangdong 518109 (CN); OUYANG, Mingxing, Shenzhen, Guangdong 518109 (CN)
(74) Representative: Huang, Liwei
(86) International application number: PCT/CN2024/088959
(87) International publication number: WO 2025/055332

(57) **Abstract**

An air pump device (11000) and a multifunctional apparatus. The air pump device (11000) comprises an energy storage unit (1100), a power connection terminal (1200), and an air pump (1300). The power connection terminal (1200) is configured to be connected to an external power supply. The air pump (1300) is connected to the energy storage unit (1100) and is connected to the power connection terminal (1200). The energy storage unit (1100) and/or the external power supply is able to power the air pump (1300).

## Description

### PRIORITY INFORMATION

The present invention claims the priority rights and interests of the patent applications with application numbers of 202311204255.5, 202322522175.6, 202311203623.4, and 202322529063.3, which are filed before the State Intellectual Property Office of China on September 15, 2023. The entire contents of the patent applications are incorporated by reference.

### TECHNICAL FIELD

The present invention relates to the technical field of air pumps, in particular to an air pump device and a multifunctional apparatus.

### BACKGROUND ART

In the related prior art, an air pump is normally connected to a cigarette-lighter socket in a vehicle, and is powered by power supply from the vehicle. Thereby, when the air pump is powered, it is necessary to use a long wire, and thus is inconvenient in use.

### SUMMARY OF INVENTION

The implementation of the present invention provides an air pump device and a multifunctional apparatus.

An air pump device according to implementation of the present invention comprises an energy storage unit, a power connection terminal and an air pump. The power connection terminal is configured to be connected to an external power supply. The air pump is configured to be connected to the energy storage unit and to be connected to the power connection terminal, so that the energy storage unit and/or the external power supply is able to power the air pump.

In the air pump device according to implementation of the present invention, the energy storage unit is a power supply provided inside the air pump device, and the power connection terminal is configured to be connected to a power supply outside the air pump device. Both the energy storage unit and the external power supply are able to power the air pump. The internal power supply and the external power supply may power the air pump separately or simultaneously. Compared with the power supply method that the air pump is connected to a cigarette-lighter socket in a vehicle, the present invention can use an internal power supply to power the air pump, which does not need to use a long wire, and thus is more convenient in use and operation.

In some embodiments, the power connection terminal is connected to an external power supply, and the external power supply at least includes a vehicle battery. The vehicle battery is configured to be connected to a vehicle cigarette lighter so as to be connected to the power connection terminal, or the vehicle battery is configured to be connected to the power connection terminal.

In some embodiments, the energy storage unit is able to power the air pump; when the power connection terminal is connected to the external power supply, the energy storage unit and/or the external power supply is able to power the air pump.

In some embodiments, the air pump device further comprises a charging module, which is provided between the energy storage unit and the power connection terminal; when the external power supply is connected to the power connection terminal, the external power supply is able to charge the energy storage unit through the charging module.

In some embodiments, the air pump device further comprises a controller, wherein a controlling terminal of the controller is configured to be connected to a controlled terminal of the air pump, and the controller is configured to control the the air pump to start or to stop.

In some embodiments, the air pump device further comprises a detection module, the detection module is configured to detect/measure a voltage of the energy storage unit and a voltage at the power connection terminal, and the controller is configured to control the the air pump to start or to stop, based on a detection result of the detection module.

In some embodiments, when the detection module detects that the voltage of the energy storage unit exceeds a first preset voltage, the controller is able to control the air pump to start, and to enable the energy storage unit to power the air pump.

In some embodiments, when the detection module detects that the voltage at the power connection terminal exceeds a second preset voltage, the controller is able to control the air pump to start, and to enable the external power supply, which is connected to the power connection terminal, to power the air pump.

In some embodiments, when the detection module detects that the voltage of the energy storage unit is lower than the first preset voltage, and the voltage at the power connection terminal is lower than a second preset voltage, the controller is able to control the air pump to stop working.

In some embodiments, the air pump device further comprises a control button; when the control button is triggered, a button trigger signal is output to the controller, so that the controller is able to control the air pump to start or to stop.

In some embodiments, the air pump device further comprises a switch unit; the controller is configured to control the switch unit to be on or off, so as to control the air pump to start or to stop.

In some embodiments, the air pump device further comprises a load connection terminal, which is configured to be connected to a load. The load may include at least one selected from a starting device and a vehicle battery.

A multifunctional apparatus according to implementation of the present invention comprises an air pump, a load connection terminal and an energy storage module. The load connection terminal is configured to be connected to a load, wherein the load comprises at least one selected form a starting device and a vehicle battery. The energy storage module is able to supply power to the air pump and/or to the load connection terminal.

In some embodiments, the multifunctional apparatus further comprises a controller, which is configured to control the energy storage module to supply power to the air pump and/or to the load connection terminal.

In some embodiments, the multifunctional apparatus further comprises a detection circuit for energy storage module, which is configured to detect/measure a voltage of the energy storage module; when the voltage detected by the detection circuit for energy storage module is lower than a first preset voltage, the controller is configured to control the energy storage module to stop supplying power.

In some embodiments, the multifunctional apparatus further comprises an alarm circuit; when the voltage detected by the detection circuit for energy storage module is lower than the first preset voltage, the alarm circuit is configured to output an alarm signal.

In some embodiments, the multifunctional apparatus further comprises a load detection circuit, which is configured to detect/measure an electrical parameter of the load connection terminal; when the voltage detected by the detection circuit for energy storage module exceeds the first preset voltage, the controller is configured to determine a corresponding working mode based on a detection result of the load detection circuit, and to control the power supply from the energy storage module to the load connection terminal based on the corresponding working mode.

In some embodiments, when the voltage detected by the load detection circuit exceeds the second preset voltage, the controller is able to control the power supply from the energy storage module to the load connection terminal according to a preset working mode.

In some embodiments, the preset working mode specifically includes: when the voltage detected by the load detection circuit exceeds the second preset voltage, the controller is configured to control the energy storage module to supply power to the load connection terminal for a first preset duration.

In some embodiments, the load detection circuit is further configured to detect/measure a current at the load connection terminal, and the controller is further configured to control the power supply from the energy storage module to the load connection terminal, based on the current detected by the load detection circuit.

In some embodiments, after the first preset duration, if the current detected by the load detection circuit is less than a preset current, the controller is configured to control the energy storage module to stop supplying power to the load connection terminal.

In some embodiments, after the first preset duration, if the current detected by the load detection circuit is greater than the preset current, the controller is configured to control the energy storage module to continue to supply power to the load connection terminal.

In some embodiments, within a second preset duration since the energy storage module has stopped supplying power to the load connection terminal, if the voltage detected by the load detection circuit is less than a third preset voltage, the controller is configured to exit the preset working mode.

In some embodiments, within a second preset duration since the energy storage module has stopped supplying power to the load connection terminal, if the voltage detected by the load detection circuit is greater than a third preset voltage, the controller is configured to, after the second preset duration, control the energy storage module to supply power again to the load connection terminal for the first preset duration.

In some embodiments, the multifunctional apparatus further comprises a control button module, which is used for controlling the energy storage module to supply power or to stop supplying power to the air pump and/or to the load connection terminal.

Some additional aspects and advantages of the present invention will be presented in the following description, and will become evident from the following description, or will be understood through implementation of the present invention.

### DESCRIPTION OF DRAWINGS

The above-mentioned and/or additional aspects and advantages of the present invention will become evident and easy to be understood from the description of the embodiments in conjunction with the following drawings, wherein:
Fig. 1 is a schematic diagram that an air pump device is connected to an external power supply according to an embodiment in the present invention;
Fig. 2 is a schematic circuit diagram of a part of circuit structure of an air pump device according to an embodiment in the present invention;
Fig. 3 is a schematic diagram of an air pump device according to an embodiment in the present invention;
Fig. 4 is a schematic circuit diagram of a part of circuit structure of an air pump device according to an embodiment in the present invention;
Fig. 5 is a schematic circuit diagram of a part of circuit structure of an air pump device according to an embodiment in the present invention;
Fig. 6 is a schematic circuit diagram of a part of circuit structure of an air pump device according to an embodiment of the present invention;
Fig. 7 is a schematic diagram of a multifunctional apparatus according to an embodiment in the present invention;
Fig. 8 is a schematic circuit diagram of a part of circuit structure in a multifunctional apparatus according to an embodiment in the present invention;
Fig. 9 is a schematic circuit diagram of a part of circuit structure in a multifunctional apparatus according to an embodiment in the present invention;
Fig. 10 is a schematic diagram of a multifunctional apparatus according to an embodiment in the present invention;
Fig. 11 is a schematic circuit diagram of a part of circuit structure in a multifunctional apparatus according to an embodiment in the present invention;
Fig. 12 is a schematic circuit diagram of a part of circuit structure in a multifunctional apparatus according to an embodiment in the present invention.

### DETAILED EMBODIMENTS

The embodiments of the present invention are described in detail below, and examples of embodiments are shown in the accompanying drawings, in which the same reference number always represents the same element or the elements with the same function, similar reference numbers represent similar elements or the elements with similar functions. The embodiments described below with reference to the accompanying drawings are exemplary, and are only used to explain the present invention, and should not be understood as limiting the present invention.

In the related prior art, an air pump is normally connected to a cigarette-lighter socket in a vehicle, and is powered by power supply from the vehicle. Thereby, when the air pump is powered, it is necessary to use a long wire, and thus is inconvenient in use.

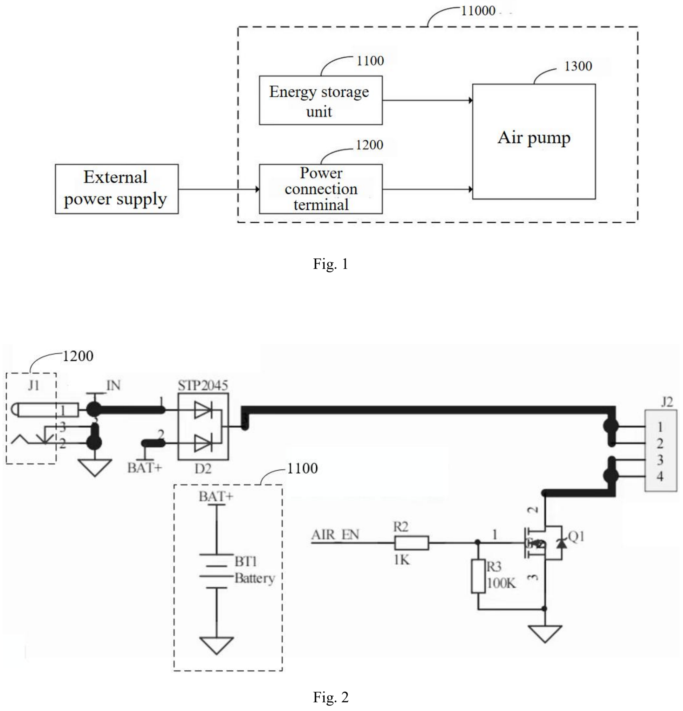

With reference to Fig. 1, the implementation of the present invention provides an air pump device 11000, comprising an energy storage unit 1100, a power connection terminal 1200, and an air pump 1300. The power connection terminal 1200 is configured to be connected to an external power supply. The air pump 1300 is connected to the energy storage unit 1100 and is connected to the power connection terminal 1200. Therefore, the energy storage unit 1100 and/or the external power supply is able to power the air pump 1300.

To be specific, the energy storage unit 1100 is a power supply provided inside the air pump device 11000, including at least one selected from a battery pack and a capacitor pack. The battery pack may be a lithium battery pack, or any another type of storage battery pack. In Fig. 2, BAT+ may be configured to be connected to a positive electrode of the energy storage unit 1100. In Fig. 2, a connector J1 may be the power connection terminal 1200, which is configured to be connected to an external power supply for the air pump device 11000. A pin 1 of the connector J1 is connected to a positive electrode of the external power supply, and pins 2 and 3 of the connector J1 are connected to a negative electrode of the external power supply. In Fig. 2, the connector J2 may be configured to be connected to the air pump 1300, so that the air pump 1300 can be connected to the energy storage unit 1100 and be connected to the power connection terminal 1200. Thereby, the energy storage unit 1100 is able to supply power to the air pump 1300, and the external power supply is also able to supply power to the air pump 1300 via/through the power connection terminal 1200.

Thereby, the energy storage unit 1100 may supply power to the air pump 1300. The internal power supply and the external power supply may supply power to the air pump 1300 separately or simultaneously. The air pump 1300 may not be connected to the external power supply. In operation, the air pump 1300 does not have to be connected to a cigarette-lighter socket in a vehicle, instead, the air pump 1300 can be powered by the internal power supply. Thereby, there is no need to use a long power cord, thus the operation can be more convenient.

In some embodiments, the power connection terminal 1200 is connected to the external power supply, and the external power supply at least includes a vehicle battery. The vehicle battery is configured to be connected to the vehicle cigarette lighter so as to be connected to the power connection terminal 1200, or the vehicle battery is configured to be connected to the power connection terminal.

To be specific, the vehicle battery may be a power supply of the vehicle, and the vehicle cigarette lighter in the vehicle may be used as an interface through which the power supply in the vehicle supplies power to its external. The power connection terminal 1200 may be connected to the vehicle cigarette lighter, so that the vehicle battery is connected to the power connection terminal 1200, and supplies power to the air pump device 11000. The vehicle battery may also be connected to the power connection terminal 1200 in another way, so as to supply power to the air pump device 11000. When the energy storage unit 1100 does not have sufficient power, the power connection terminal 1200 may be connected to the vehicle cigarette lighter, so that the vehicle battery supplies power to the air pump 1300, or the vehicle battery may be directly connected to the power connection terminal 1200, so as to supply power to the air pump 1300. Thereby, it ensures that the air pump 1300 can still function properly. when the energy storage unit 1100 does not have sufficient power.

Thereby, when the energy storage unit 1100 is out of power, the vehicle battery can supply power to the air pump 1300, so that the air pump 1300 can function properly.

In some embodiments, the energy storage unit 1100 is able to power the air pump 1300. When the power connection terminal 1200 is connected to the external power supply, the energy storage unit 1100 and/or the external power supply is able to power the air pump 1300.

To be specific, the power supply from the energy storage unit 1100 to the air pump 1300 and the power supply from the external power supply (which is connected to the power connection terminal 1200) to the air pump 1300 are independent of each other. The energy storage unit 1100 is able to power the air pump 1300, and the external power supply is also able to power the air pump 1300. When the energy storage unit 1100 has sufficient power and the power connection terminal 1200 is connected to the external power supply, the energy storage unit 1100 and the external power supply may power the air pump 1300 separately or simultaneously.

Thereby, both the energy storage unit 1100 and the external power supply are able to serve as a power supply for the air pump 1300. Besides, the energy storage unit 1100 and the external power supply are independent.

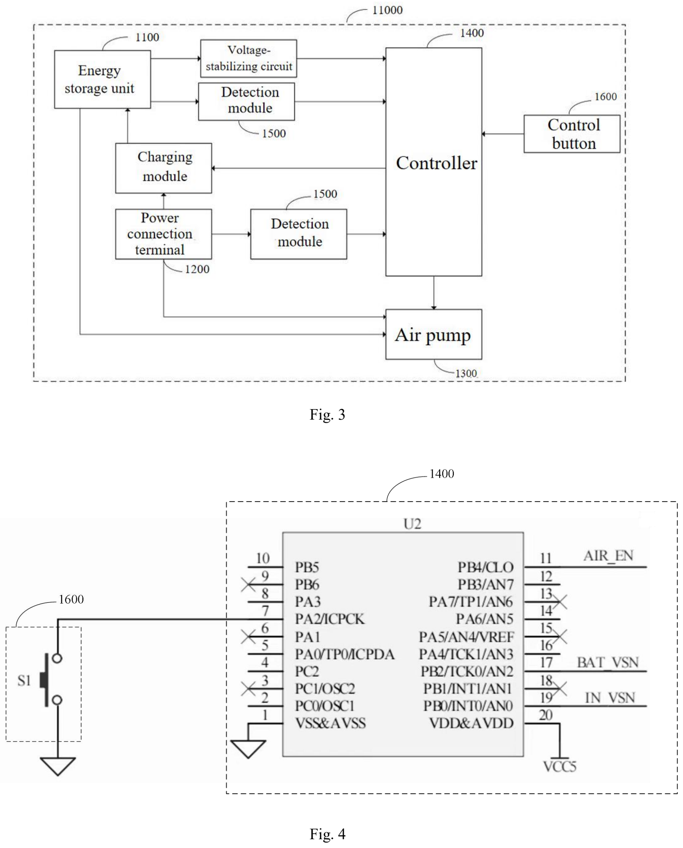

With reference to Fig. 3, in some embodiments, an air pump device 11000 further comprises a charging module, which is provided between an energy storage unit 1100 and a power connection terminal 1200. An external power supply, which is connected to the power connection terminal 1200, is able to charge the energy storage unit 1100 through the charging module. To be specific, the external power supply, which is connected to the power connection terminal 1200, may not only supply power to the air pump 1300, but also charge the energy storage unit 1100. The external power supply may be connected to the charging module via/through the power connection terminal 1200. The charging module may be a charging device (charger) corresponding to the energy storage unit 1100. For example, when the energy storage unit 1100 is a lithium battery pack, the charging module may be a charger corresponding to the lithium battery pack. When the external power supply is connected to the charging module, the charging module is able to charge the energy storage unit 1100. When the air pump 1300 is not in operation, the charging module is still able to supply power to the energy storage unit 1100. When the energy storage unit 1100 has sufficient power, the endurance of the air pump device can be greatly improved.

Thereby, the external power supply is able to charge the energy storage unit 1100, so as to improve the endurance of the air pump device during operation.

With reference to Fig. 3, in some embodiments, the air pump device 11000 further comprises a controller 1400. A controlling terminal of the controller 1400 is configured to be connected to a controlled terminal of the air pump 1300. The controller 1400 is configured to control the air pump 1300 to start or to stop.

To be specific, the controller 1400 may be the U2 in Fig. 4. An AIR_EN signal, which is output by U2, is able to control the air pump 1300 to start or to stop. The air pump 1300 may be connected to J2 in Fig. 2. As a supposed example, a high-level AIR_EN signal controls the air pump 1300 to start, a low-level AIR_EN signal controls the air pump 1300 to stop. When the controller 1400 controls the air pump 1300 to start, the AIR_EN signal is a high-level signal, so that Q1 in Fig. 2 is turned on, so that pins 3 and 4 of J2 are grounded, and pins 1 and 2 of J2 are connected to a high-level voltage. In this case, the air pump 1300 connected to J2 is started. When the controller 1400 controls the air pump 1300 to stop, the AIR_EN signal is a low-level signal, so that Q1 in Fig. 2 is turned off, so that pins 3 and 4 of J2 are not grounded. In this case, the air pump 1300 connected to J2 is stopped.

Thereby, the controller 1400 is able to control the the air pump 1300 to start or to stop.

With reference to Fig. 3, in some embodiments, the air pump device 11000 further comprises a detection module 1500, and the detection module 1500 is configured to detect/measure a voltage of the energy storage unit 1100 and a voltage at the power connection terminal 1200. The controller 1400 is configured to control the air pump 1300 to start or to stop, based on a detection result of the detection module 1500.

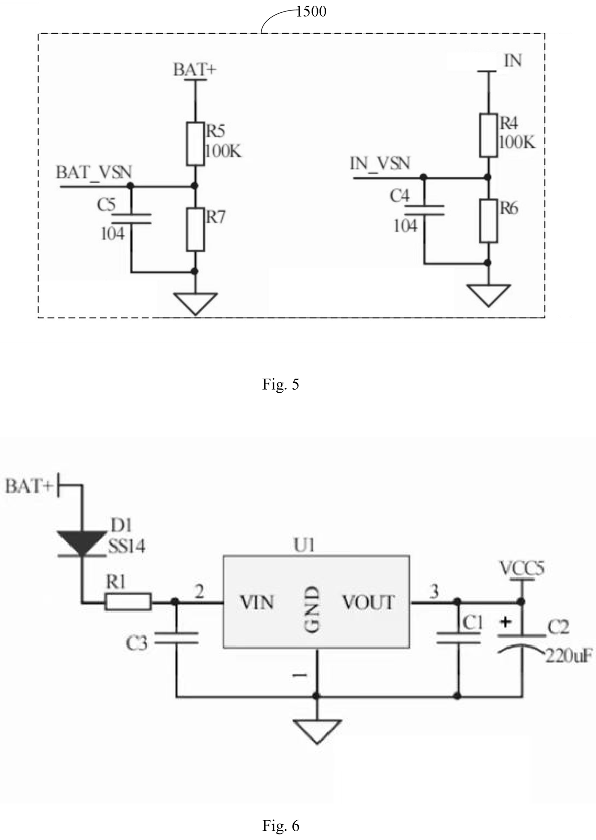

To be specific, the detection module 1500 may be connected to the controller 1400 via/through a BAT_VSN terminal and a IN_VSN terminal in Fig. 5. The energy storage unit 1100 is connected in series with a resistor R5 and a resistor R7, and the voltage at the BAT_VSN terminal is a divided voltage across the resistor R7, so that the voltage of energy storage unit 1100 may be detected/measured through the voltage at the BAT_VSN terminal. The power connection terminal 1200 is connected in series with a resistor R4 and a resistor R6, and the voltage at the IN_VSN terminal is a divided voltage across the resistor R6, so that the voltage at the power connection terminal 1200 may be detected/measured through the voltage at the IN_VSN terminal. The controller 1400 may be configured to output an AIR_EN signal to control the air pump 1300 to start or to stop, based on the voltage at the BAT_VSN terminal and the voltage at the IN_VSN terminal. Both the voltage of the energy storage unit 1100 and the voltage at the power connection terminal 1200 can be used as the power supply voltage for the air pump 1300. By detecting/measuring the voltage of the energy storage unit 1100 and the voltage at the power connection terminal 1200, the detection module 1500 is able to determine whether there is sufficient power supply voltage for the air pump 1300. When the detection module 1500 detects that there is insufficient power supply voltage for the air pump 1300, the controller 1400 controls the air pump to stop working. When the detection module 1500 detects that there is sufficient power supply voltage for the air pump 1300, the controller 1400 controls the air pump to start working.

Thereby, the detection module 1500 is able to detect/measure the voltage of energy storage unit 1100 and the voltage at power connection terminal 1200. The controller 1400 is able to determine whether there is sufficient power supply voltage for the air pump 1300, based on the detection result of the detection module 1500, so as to control the air pump 1300 to start or to stop.

In some embodiments, when the detection module 1500 detects that the voltage of the energy storage unit 1100 exceeds a first preset voltage, the controller 1400 is configured to control the air pump 1300 to start and to enable the energy storage unit 1100 to power the air pump 1300.

To be specific, in Fig. 4 , the controller 1400 detects/measures the voltage of the energy storage unit 1100 via/through the BAT_VSN terminal. When the voltage of the energy storage unit 1100 is lower than the first preset voltage, it may be considered that the voltage of the energy storage unit 1100 is insufficient to power the air pump 1300. When the voltage of the energy storage unit 1100 exceeds the first preset voltage, it may be considered that the voltage of the energy storage unit 1100 is sufficient to power the air pump 1300. The controller 1400 may control the air pump 1300 to start, and allow the energy storage unit 1100 to serve as a power supply for the air pump 1300.

Thereby, when the voltage of the energy storage unit 1100 exceeds the first preset voltage, the voltage of the energy storage unit 1100 is sufficient to power the air pump 1300, the controller 1400 is configured to control the air pump 1300 to start, and to enable the energy storage unit 1100 to supply power to the air pump 1300.

In some embodiments, when the detection module 1500 detects that the voltage at the power connection terminal 1200 exceeds a second preset voltage, the controller 1400 is configured to control the air pump 1300 to start, and to enable the external power supply, which is connected to the power connection terminal 1200, to supply power to the air pump 1300.

To be specific, in Fig. 4, the controller 1400 detects/measures the voltage at the power connection terminal 1200 via/through the IN_VSN terminal. When the voltage at the power connection terminal 1200 is lower than the second preset voltage, it may be considered that the voltage of the external power supply is insufficient to power the air pump 1300. When the voltage at the power connection terminal 1200 exceeds the second preset voltage, it may be considered that the voltage of the external power supply is sufficient to power the air pump 1300. The controller 1400 may control the air pump 1300 to start, and allow the external power supply to serve as a power supply for air pump 1300.

Thereby, when the voltage at the power connection terminal 1200 exceeds the second preset voltage, the voltage of the connected external power supply is sufficient to power the air pump 1300, the controller 1400 is configured to control the air pump 1300 to start, so that the external power supply powers the air pump 1300.

In some embodiments, when detection module 1500 detects that the voltage of energy storage unit 1100 is lower than the first preset voltage, and the voltage at the power connection terminal 1200 is lower than the second preset voltage, the controller 1400 is configured to control the air pump 1300 to stop working.

To be specific, in Fig. 4 , the controller 1400 detects/measures the voltage of the energy storage unit 1100 via/through the BAT_VSN terminal, and detects/measures the voltage of the energy storage unit 1100 via/through the IN_VSN terminal. When the voltage of the energy storage unit 1100 is lower than the first preset voltage and the voltage at the power connection terminal 1200 is lower than the second preset voltage, it may be considered that the voltage of the energy storage unit 1100 is insufficient to power the air pump 1300 and the voltage of the external power supply is insufficient to power the air pump 1300 as well. In this case, there is no power source for the air pump 1300, the air pump 1300 cannot work, so the controller 1400 cannot allow the air pump 1300 to work. When the voltage of energy storage unit 1100 exceeds the first preset voltage and the voltage at power connection terminal 1200 exceeds the second preset voltage, it may be considered that both the voltage of energy storage unit 1100 and the voltage at the power connection terminal 1200 are sufficient to power the air pump 1300. In this case, both the energy storage unit 1100 and the external power supply are able to serve as a power supply for the air pump 1300. The energy storage unit 1100 and the external power supply may power the air pump 1300 separately or simultaneously. The controller 1400 can control air pump 1300 to start.

Thereby, when the voltage of the energy storage unit 1100 is lower than the first preset voltage, and the voltage at the power connection terminal 1200 is lower than the second preset voltage, there is no sufficient power supply voltage for the air pump 1300, the air pump 1300 cannot work, so the controller 1400 cannot allow the air pump 1300 to start. When the voltage of energy storage unit 1100 exceeds the first preset voltage and the voltage at power connection terminal 1200 exceeds the second preset voltage, both the energy storage unit 1100 and the external power supply can serve as a power supply for the air pump 1300, so the controller 1400 can control air pump 1300 to start.

With reference to Fig. 3, in some embodiments, the air pump device 11000 further comprises a control button 1600. When the control button 1600 is triggered, a button trigger signal is output to the controller 1400, so that the controller 1400 is able to control the air pump 1300 to start or to stop.

To be specific, the control button 1600 may be a button S1 in Fig. 4. When the voltage of the energy storage unit 1100 exceeds a first preset value, or the voltage at the power connection terminal 1200 exceeds a second preset value, pins 1 and 2 of J2 in Fig. 2 are connected to a high-level voltage. In this case, if the button S1 is pressed, the AIR_EN signal output by the controller 1400 makes the Q1 in Fig. 2 to be turned on, so that pins 3 and 4 of J2 are grounded, so that a voltage difference is generated between pins 1, 2 and pins 3, 4 of J2, and connecting J2 to the air pump 1300 can start the air pump 1300. When the air pump 1300 has been started, and the button S1 is pressed again, the AIR_EN signal output by the controller 1400 makes the Q1 in Fig. 2 to be turned off, so that pins 3 and 4 of J2 cannot be grounded, so that the air pump 1300 stops.

Thereby, the air pump 1300 can be started or stopped by the control button 1600.

In some embodiments, the air pump device 11000 further comprises a switch unit. The controller 1400 is configured to control the air pump 1300 to start or to stop, by controlling the switch unit to be on or off.

To be specific, the switch unit may be a MOS transistor Q1 as shown in Fig. 2. When the AIR_EN signal output by controller 1400 is a high-level signal, the transistor Q1 is turned on, so that pins 3 and 4 of J2 are grounded. When the external power supply is connected to the power connection terminal 1200, pins 1 and 2 of J2 are connected to a high-level voltage, so that a voltage difference is generated between pins 1, 2 and pins 3, 4 of J2, and connecting J2 to the air pump 1300 can start the air pump 1300. When the AIR_EN signal output by the controller 1400 is a low-level signal, the transistor Q1 is turned off, so that pins 3 and 4 of J2 cannot be grounded, so that the air pump 1300, which is connected to J2, stops.

Thereby, the controller 1400 is able to control the air pump 1300 to start or to stop, by controlling the the switch unit to be on or off.

With reference to Fig. 3, in some embodiments, the air pump device 11000 further comprises a voltage-stabilizing circuit.

To be specific, the voltage-stabilizing circuit may be a voltage-stabilizing chip U1 as shown in Fig. 6. The voltage of the energy storage unit 1100 may be connected to the voltage-stabilizing chip U1. The voltage-stabilizing chip U1 outputs a stable voltage for powering the controller 1400 in Fig. 4.

In some embodiments, the air pump device 11000 further comprises a load connection terminal. The load connection terminal is configured to be connected to a load. The load includes at least one selected from a starting device and a vehicle battery.

To be specific, the load is connected to the the load connection terminal, and a power supply from the energy storage unit 1100 and that from the connected power connection terminal 1200, can supply power to the load. The power supply from the energy storage unit 1100 and the power supply connected to the power connection terminal 1200, can serve as a shared power source for the air pump 1300 and for the load, and are able to power the connected load and air pump 1300. The energy storage group 1100 can supply power to the air pump 1300 alone or the external load alone, or supply power to the air pump 1300 and the external load simultaneously. The power supply, which is connected to the power connection terminal 1200, can supply power to the air pump 1300 alone or the external load alone, or supply power to the air pump 1300 and the external load simultaneously. When supplying power to external, the power supply from the energy storage unit 1100 and the power supply connected to the power connection terminal 1200 are independent of each other.

A power in the starting device and in the vehicle battery is used to start the vehicle. When the power in the starting device and in the vehicle battery is insufficient, the vehicle cannot start properly. The load connection terminal may be connected to the vehicle battery or the starting device, so that the power supply from the energy storage unit 1100 or the power supply connected to the power connection terminal 1200 of the air pump device 11000 can supply power to the vehicle battery or the starting device, via/through the load connection terminal, so that the vehicle can start properly.

Thereby, the air pump device 11000 achieves a combination of a power supply for the air pump 1300 and a mobile power bank, and integrates the function of the air pump 1300 and the function of the mobile power bank into one product, thereby reducing the area occupied by vehicle-mounted devices, and making it more convenient to use and carry. The air pump device 11000 can be used as a power supply for vehicle starting, to power the vehicle battery or the starting device, so as to start the vehicle.

The air pump device 11000 according to implementation of the present invention comprises the energy storage unit 1100, the power connection terminal 1200 and the air pump 1300. The power connection terminal 1200 is configured to be connected to the external power supply. The air pump 1300 is connected to the energy storage unit 1100 and is connected to the power connection terminal 1200. The energy storage unit 1100 and/or the external power supply is able to power the air pump 1300. For the air pump device 11000 provided in the present invention, the internal power supply and the external power supply may power the air pump 1300 separately or simultaneously. Compared with the power supply method that the air pump is connected to a cigarette-lighter socket in a vehicle, the present invention can use an internal power supply to power the air pump, which does not need to use a long wire, and thus is more convenient in use and operation.

In the relevant prior art, an air pump and a starting power supply (jump starter) of vehicle are two independent products. A vehicle owner usually needs to put both of the two products in the vehicle for use, thus, the occupied space is increased and it is relatively inconvenient to use and carry.

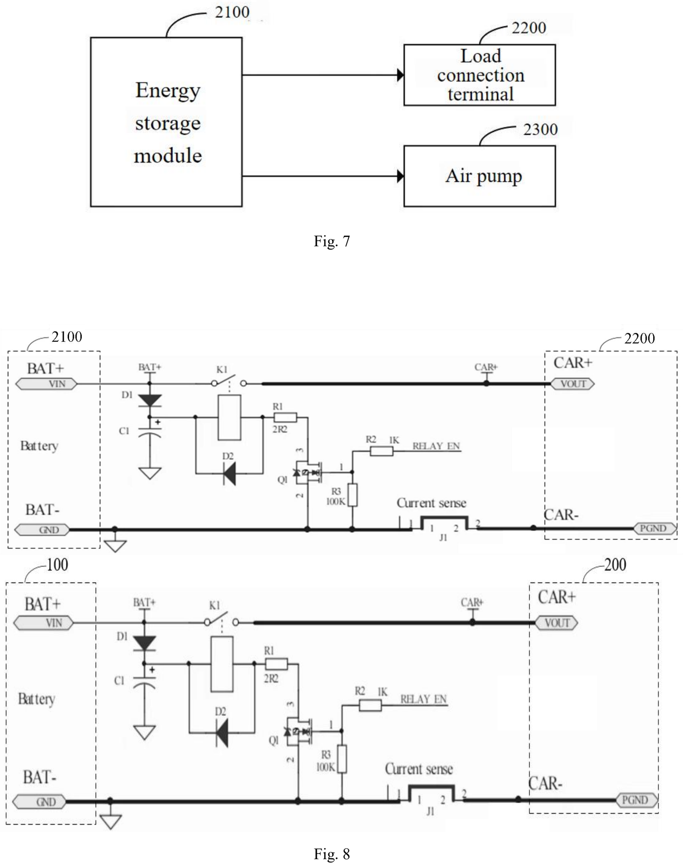

With reference to FIG. 7, the implementation of the present invention provides a multifunctional apparatus, comprising an air pump 2300, a load connection terminal 2200, and an energy storage module 2100. The load connection terminal 2200 is configured to be connected to a load. The load includes at least one selected from a starting device and a vehicle battery. The energy storage module 2100 is able to power the air pump 2300 and/or the load connection terminal 2200.

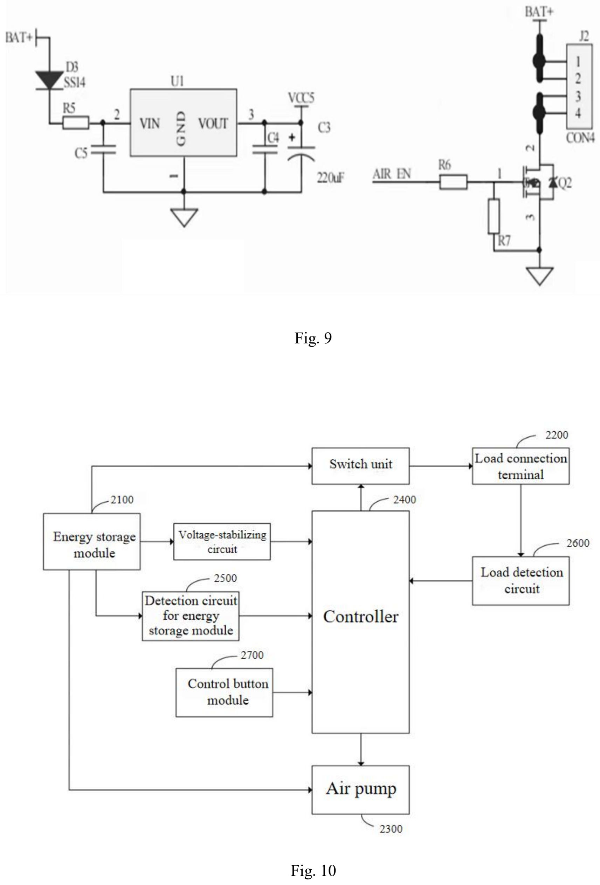

To be specific, the energy storage module 2100 is a power supply provided inside the multifunctional apparatus. A positive electrode of the energy storage module 2100 may be BAT+ in Fig. 8, and a negative electrode of the energy storage module 2100 may be BAT- in Fig. 8. The load connection terminal 2200 is configured to be connected to a load. A positive electrode of the load connection terminal 2200 may be CAR+ in Fig. 8, and a negative electrode of the load connection terminal 2200 may be CAR- in Fig. 8. A connector J2 in Fig. 9 may be configured to be connected to the air pump 2300. As a shared power source for the air pump 2300 and the load connection terminal 2200, the energy storage module 2100 are able to power the connected load and the air pump 2300. The energy storage module 2100 can supply power to the air pump 2300 alone or the load alone, or supply power to the air pump 2300 and the load simultaneously. The multifunctional apparatus is able to supply power to an external load via/through the load connection terminal 2200, which meets the requirement of a mobile power bank, and meanwhile has a function of the air pump 2300.

Thereby, the multifunctional apparatus achieves a combination of a power supply for the air pump 2300 and a mobile power bank, and integrates the function of the air pump 2300 and the function of the mobile power bank into one product, thereby reducing the area occupied by vehicle-mounted devices, and making it more convenient to use and carry.

To be specific, the power in the starting device and in the vehicle battery can be used to start the vehicle. When the power in the starting device and in the vehicle battery is insufficient, the vehicle cannot start properly. The load connection terminal 2200 may be connected to the vehicle battery or the starting device, so that the energy storage module 2100 in the multifunctional apparatus can supply power to the vehicle battery or the starting device, via/through the load connection terminal 2200, so that the vehicle can start properly.

Thereby, the multifunctional apparatus can be used as a power supply for vehicle starting, to supply power to the vehicle battery or to the starting device, so as to start the vehicle.

With reference to Fig. 10, in some embodiments, a multifunctional apparatus further comprises a controller 2400. The controller 2400 is used to control an energy storage module 2100 to supply power to an air pump 2300 and/or to a load connection terminal 2200.

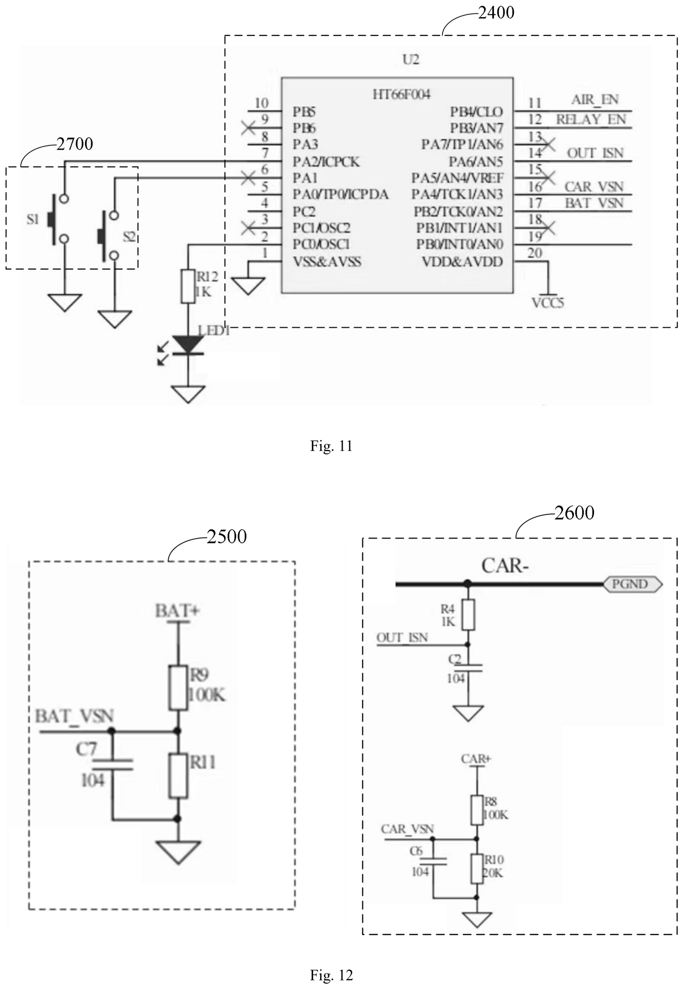

To be specific, the controller 2400 may be a controller U2 as shown in Fig. 11. The controller U2 may output a control signal so as to control the energy storage module 2100 to supply power to the air pump 2300, and may also output a control signal so as to control the energy storage module 2100 to supply power to the load connection terminal 2200. When the controller U2 controls the energy storage module 2100 to supply power to the air pump 2300, the controller U2 outputs a voltage via/through the AIR_EN terminal, so as to control the switching transistor Q2 in Fig. 9, so that Q2 is turned on, and pins 3 and 4 of the connector J2 are grounded. A voltage difference is generated between pins 1, 2 and pins 3, 4 of the connector, and connecting the connector to the air pump 2300 makes the air pump 2300 work. Thereby, the energy storage module 2100 is able to supply power to the air pump 2300. When the controller U2 controls the energy storage module 2100 to supply power to the load connection terminal 2200, the controller U2 outputs a voltage via/through the RELAY_EN terminal, so as to control the switching transistor Q1 in Fig. 8 to be turned on, so as to control the switch K1 to be closed, so that the positive electrode BAT+ of the energy storage module 2100 is connected to the positive electrode CAR+ of the load connection terminal 2200, and the energy storage module 2100 is able to supply power to load connection terminal 2200.

Thereby, the controller 2400 is able to control the energy storage module 2100 to supply power to the air pump 2300 and/or to the load connection terminal 2200.

With reference to Fig. 10, in some embodiments, the controller 2400 in the multifunctional apparatus further comprises a detection circuit 2500 for energy storage module. The detection circuit 2500 for energy storage module is configured to detect/measure a voltage of an energy storage module 2100; when the voltage detected by the detection circuit 2500 for energy storage module is lower than a first preset voltage, the controller 2400 is configured to control the energy storage module 2100 to stop supplying power.

To be specific, the detection circuit 2500 for energy storage module may refer to Fig. 12. The energy storage module 2100 is connected in series with a resistor R9 and a resistor R11. The voltage at the BAT_VSN terminal is a divided voltage across the resistor R9. Therefore, the voltage of the energy storage module 2100 may be detected/measured through the voltage at the BAT_VSN terminal. The detection circuit 2500 for energy storage module is connected to the controller U2 via/through the BAT_VSN terminal. The controller U2 is configured to detect/measure the voltage of the energy storage module 2100 according to the voltage at the BAT_VSN terminal, and control the energy storage module 2100 to stop supplying power to the external, when the detected voltage is lower than the first preset voltage.

Thereby, the detection circuit 2500 for energy storage module is able to detect/measure the voltage of the energy storage module 2100, and the controller 2400 is able to control the energy storage module 2100 to stop supplying power to the external, when the voltage of the energy storage module 2100 is too low. This can reduce or avoid the problem that the multifunctional apparatus is damaged by undervoltage of the energy storage module 2100.

In some embodiments, the multifunctional apparatus further comprises an alarm circuit. When the voltage detected by the detection circuit 2500 for energy storage module is lower than the first preset voltage, the alarm circuit is configured to output an alarm signal.

To be specific, the alarm circuit may be an indicator light LDE1 as shown in Fig. 11. When the voltage detected by the detection circuit 2500 for energy storage module is lower than the first preset voltage, the voltage of the energy storage module 2100 is too low, the alarm circuit outputs an alarm signal, and the indicator light is turned on. The alarm circuit may include a sound alarm device, such as a buzzer. When the alarm circuit outputs an alarm signal, the sound alarm device emits a warning sound.

Thereby, the alarm circuit is able to output an alarm signal when the voltage of the energy storage module 2100 is too low, thereby reducing or avoiding the problem that the multifunctional apparatus is damaged by undervoltage of the energy storage module 2100.

With reference to Fig. 10, in some embodiments, the controller 2400 in the multifunctional apparatus further comprises a load detection circuit 2600. The load detection circuit 2600 is configured to detect/measure an electrical parameter at the load connection terminal 2200. When the voltage detected by a detection circuit 2500 for energy storage module exceeds the first preset voltage, the controller 2400 is configured to determine a corresponding working mode based on the detection result of the load detection circuit 2600, and control the power supply from an energy storage module 2100 to the load connection terminal 2200 based on the corresponding working mode.

To be specific, electrical parameters at the load connection terminal 2200 may include a current and a voltage at the load connection terminal 2200. The load detection circuit 2600 may refer to Fig. 12. The positive electrode CAR+ of the load connection terminal 2200 is connected in series with a resistor R8 and a resistor R10. The voltage at the CAR_VSN terminal is a divided voltage across the resistor R8. Therefore, the voltage at the load connection terminal 2200 may be detected/measured through the voltage at the CAR_VSN terminal. The negative electrode CAR- of the load connection terminal 2200 is connected to a resistor R4 and a capacitor C2, and then connected to ground. When the load connected to the load connection terminal 2200 starts, the current of the load flows from the positive electrode CAR+ of the load connection terminal 2200 into the negative electrode CAR- of the load connection terminal 2200, and then flows to the ground. The current flowing through the resistor R4 and the capacitor C2 is the current of the load, so the current at the OUT_ISN terminal is the current of the load. When the controller U2 in Fig. 11 is connected to the load detection circuit 2600 through the CAR_VSN terminal and through the OUT_ISN terminal, the controller U2 is able to obtain the detected voltage and current of the load, and output a control signal from the RELAY_EN terminal according to the detection result, so as to control the state of the switching transistor Q1 and the state of the switch K1 in Fig. 8, so as to control the power supply from the energy storage module 2100 to the load connection terminal 2200.

Thereby, the load detection circuit 2600 is able to detect/measure the electrical parameter(s) at the load connection terminal 2200. The controller 2400 is able to control the power supply from the energy storage module 2100 to the load connection terminal 2200, according to the detection result of the load detection circuit 2600.

In some embodiments, when the voltage detected by the load detection circuit 2600 exceeds a second preset voltage, the controller 2400 is able to control the power supply from the energy storage module 2100 to the load connection terminal 2200 according to a preset working mode.

To be specific, when the voltage detected by the load detection circuit 2600 exceeds the second preset voltage, it may be considered that at that time the load connection terminal 2200 is connected to a power-consuming load. The controller U2 in Fig. 11 is provided with a preset working mode. When the connected load starts to operate, the controller 2400 is able to output a control signal at the RELAY_EN terminal according to the preset working mode, so as to control the state of the switching transistor Q1 and the state of the switch K1 in Fig. 8, so as to control the power supply from the energy storage module 2100 to the load connection terminal 2200. When the voltage detected by the load detection circuit 2600 is lower than the second preset voltage, it may be considered that at that time the load connection terminal 2200 is not connected to a power-consuming load, so that the energy storage module 2100 does not supply power to the load connection terminal 2200.

Thereby, when the load connection terminal 2200 is connected to a power-consuming load, the controller 2400 is able to control the power supply from the energy storage module 2100 to the load connection terminal 2200, according to the preset working mode, so as to avoid that the energy storage module 2100 supplies power to the load connection terminal 2200 too early and causes a waste of electrical energy.

In some embodiments, when the voltage detected by the load detection circuit 2600 exceeds the second preset voltage, the controller 2400 is configured to control the energy storage module 2100 to supply power to the load connection terminal for a first preset duration.

To be specific, the preset working mode of the controller 2400 specifically includes: controlling the energy storage module 2100 to supply power to the load connection terminal 2200 for a first preset duration. When the load connection terminal 2200 is connected to a power-consuming load, the preset working mode is entered. The controller 2400 first controls the energy storage module 2100 to supply power to the load connection terminal 2200. After supplying power for a period of time, the controller 2400 controls the power supply from energy storage module 2100 to load connection terminal 2200 according to the current of the load. In a preset working mode, the controller 2400 first controls energy storage module 2100 to supply power to the load connection terminal 2200. The controller U2 in Fig. 11 outputs a control signal through the RELAY_EN terminal, so as to close the switch K1 in Fig. 8 for a period of time. The period of time during which the switch K1 is closed is the first preset duration. Thereby, the energy storage module 2100 supplies power to the load during the first preset duration.

In some embodiments, the load detection circuit 2600 is configured to detect/measure a current of a load connection terminal 2200, and the controller 2400 is configured to control the power supply from an energy storage module 2100 to the load connection terminal 2200, based on the current detected by the load detection circuit 2600.

To be specific, after the first preset duration of the controller 2400, the current detected by the load detection circuit 2600 is compared with a preset current, and the power supply from the energy storage module 2100 to the load connection terminal 2200 is controlled according to the comparison result. If the connected load is a starting device or a vehicle battery, the preset current may be set according to the operating current during vehicle ignition, and the comparison result between the preset current and the load current can reflect a working status of starting the vehicle. Based on the working status of starting the vehicle, the controller 2400 is able to control the power supply to the starting device or to the vehicle battery. After the first preset duration, the controller U2 compares the current detected at the OUT_ISN terminal with the preset current, and outputs a control signal through the RELAY_EN terminal based on the comparison result, so as to control the switch K1, so as to control the power supply from the energy storage module 2100 to the load connection terminal 2200.

Thereby, the controller 2400 is able to control the power supply from the energy storage module 2100 to the load connection terminal 2200, based on the working status of the load. When the connected load is a starting device or a vehicle battery, the controller 2400 is able to control the power supply to the starting device or to the vehicle battery, based on the working status of starting the vehicle.

In some embodiments, after the first preset duration, if the current detected by the load detection circuit 2600 is less than a preset current, the controller 2400 is configured to control the energy storage module 2100 to stop supplying power to the load connection terminal 2200.

To be specific, after the first preset duration of the controller 2400, if the current detected by the load detection circuit 2600 is less than the preset current, it may be considered that the load no longer needs the electrical energy from the energy storage module 2100. In this case, the energy storage module 2100 is controlled to stop supplying power to the load connection terminal 2200. In the case that the load connected to the load connection terminal 2200 is a starting device or a vehicle battery, when the current detected by the load detection circuit 2600 is less than the preset current, the current of the load is much smaller than the operating current during vehicle ignition, so it may be considered that the ignition starting of the vehicle has been completed. The energy storage module 2100 stops supplying power to the load connection terminal 2200.

Thereby, the controller 2400 is able to timely stop the energy storage module 2100 from supplying power to the load connection terminal 2200, so as to avoid that the energy storage module 2100 supplies power to the load connection terminal 2200 too long and causes a waste of electrical energy.

In some embodiments, after the first preset duration, if the current detected by the load detection circuit 2600 exceeds the preset current, the controller 2400 is configured to control the energy storage module 2100 to continue to supply power to the load connection terminal 2200.

To be specific, after the first preset duration of the controller 2400, if the current detected by the load detection circuit 2600 exceeds the preset current, it may be considered that the load still needs electrical energy, so the energy storage module 2100 continues to supply power to the load connection terminal 2200. In the case that the load connected to the load connection terminal 2200 is a starting device or a vehicle battery, when the current detected by the load detection circuit 2600 exceeds the preset current, the current of the load is still relatively large. The current of the load may be approximately the same as the operating current during the vehicle ignition. Thus, it may be considered that the vehicle is still in the process of ignition starting. The energy storage module 2100 continues to supply power to the load connection terminal 2200.

In some embodiments, within a second preset duration since the energy storage module 2100 has stopped supplying power to the load connection terminal 2200, if the voltage detected by the load detection circuit 2600 is less than a third preset voltage, the controller 2400 is further configured to exit the preset working mode.

To be specific, the energy storage module 2100 stops supplying power to the load connection terminal 2200, and the switch K1 is kept off for a period of time, i.e., for the second preset duration. During the period when K1 is kept off, the controller U2 will base its determination on a voltage detected by the load detection circuit 2600. If during the second preset duration it is detected that the voltage of the load is lower than the third preset voltage, it may be considered that the load connection terminal 2200 is no longer connected to the load, so the switch K1 continues to be kept off, and the energy storage module 2100 remains in a state of not supplying power to the load connection terminal 2200, and the preset working mode is exited. The third preset voltage may be set to a value lower than the second preset voltage. This can avoid an occurrence of a repetitive cycling that the preset working mode is exited and then entered again, in the situation that the detected voltage detected is lower than the third preset voltage and higher than the second preset voltage.

Thereby, when the load connection terminal 2200 is no longer connected to the load, the switch K1 continues to be kept off, and the energy storage module 2100 remains in the state of not supplying power to the load connection terminal 2200.

In some embodiments, within the second preset duration since the energy storage module 2100 has stopped supplying power to the load connection terminal 2200, if the voltage detected by the load detection circuit 2600 exceeds the third preset voltage, the controller 2400 is configured to, after the second preset duration, control the energy storage module 2100 to supply power again to the load connection terminal 2200 for the first preset duration.

To be specific, the energy storage module 2100 stops supplying power to the load connection terminal 2200, and the switch K1 is kept off for a period of time, i.e., for the second preset duration. During the period when K1 is kept off, the controller U2 will base its determination on the voltage detected by the load detection circuit 2600. If all the detected voltages of the load during the second preset duration exceed the third preset voltage, it may be considered that a power-consuming load is connected. After the second preset duration, K1 is switched from off to on, so that the energy storage module 2100 supplies power again to the load connection terminal 2200, so as to supply power to the power-consuming load. If the connected load is a vehicle battery, the current of the load after the vehicle ignition is less than a preset current, and the switch K1 is kept off for the second preset duration, so that the energy storage module 2100 does not supply power to the vehicle battery during the second preset duration. However, if another device in the vehicle is also power-consuming, all the voltages detected by the load detection circuit 2600 during the period when the switch K1 is kept off, exceed the third preset voltage. After the second preset duration, the switch K1 is closed again, so that the energy storage module 2100 supplies power to the vehicle battery, so as to meet the power consumption demand of another device in the vehicle.

Thereby, the energy storage module 2100 is controlled to supply power to the load connection terminal 2200 according to the preset working mode. This can meet the power consumption demand of the vehicle, after the ignition has been completed.

With reference to Fig. 10, in some embodiments, the controller 2400 in the multifunctional apparatus further comprises a control button module 2700. The control button module 2700 is configured to control the energy storage module 2100 to supply or stop supplying power to the air pump 2300 and/or to the load connection terminal 2200.

To be specific, the control button module 2700 may be composed of a button S1 and a button S2 as shown in Fig. 11. When the voltage of the energy storage module 2100 exceeds a first preset voltage, one button in the control button module 2700 is configured to control the energy storage module 2100 to supply or stop supplying power to the air pump 2300, and the other button is configured to control the energy storage module 2100 to supply or stop supplying power to the load connection terminal 2200. As a supposed example, the button S1 controls the energy storage module 2100 to supply or stop supplying power to the load connection terminal 2200, then when S1 is pressed for the first time, the energy storage module 2100 supplies power to the load connection terminal 2200, and then when S1 is pressed again, the energy storage module 2100 stops supplying power to the load connection terminal 2200. Therein, in the case that the button S1 controls the energy storage module 2100 to supply or stop supplying power to the load connection terminal 2200, the detection result of the load detection circuit 2600 does not need to be considered.

Thereby, the control button module 2700 is able to control the energy storage module 2100 to supply or stop supplying power to the air pump 2300 and/or to the load connection terminal 2200.

With reference to Fig. 10, in some embodiments, the controller 2400 in the multifunctional apparatus further comprises a switch unit. The switch unit is configured to control the connection/disconnection between the energy storage module 2100 and the load connection terminal 2200.

To be specific, the switch unit may be composed of a switch transistor Q1 and a switch K1 as shown in Fig. 8. When the RELAY_EN signal output by the controller 2400 is a high-level signal, the switch transistor Q1 is turned on, so that the switch K1 is closed, and a positive electrode BAT+ of the energy storage module 2100 is connected to CAR+ of the load connection terminal 2200. When the RELAY_EN signal output by the controller 2400 is a low-level signal, the switch transistor Q1 is turned off, so that the switch K1 is disconnected, and the connection between the positive electrode BAT+ of the energy storage module 2100 and CAR+ of the load connection terminal 2200 is disconnected.

Thereby, the switch unit is able to control the connection/disconnection between the energy storage module 2100 and the load connection terminal 2200.

With reference to Fig. 10, in some embodiments, the controller 2400 in the multifunctional apparatus further comprises a voltage-stabilizing circuit.

To be specific, the voltage-stabilizing circuit may be a voltage-stabilizing chip U1 as shown in Fig. 9. The voltage of the energy storage module 2100 may be connected to the voltage-stabilizing chip U1. The voltage-stabilizing chip U1 outputs a stable voltage to power the controller 2400 in Fig. 11.

The multifunctional apparatus according to implementation of the present invention comprises the air pump 2300, the load connection terminal 2200, and the energy storage module 2100. The load connection terminal 2200 is configured to be connected to the load. The energy storage module 2100 is able to supply power to the air pump 2300 and/or to the load connection terminal 2200. The multifunctional apparatus of the present invention has a function of the air pump 2300, and can also power an external load via/through the load connection terminal 2200, thereby meeting the requirement to serve as a mobile power bank. In this case, the compatibility between a power supply for the air pump 2300 and a mobile power bank is achieved. Thereby, the occupied area is reduced, and it is more convenient to use and carry.

In the description of the present specification, the reference terms such as "an embodiment", "some embodiments", "illustrative embodiments", "examples", "specific examples" or "some examples", etc. mean that the specific features, structures, materials or characteristics as described according to the embodiments/examples are included in at least one embodiment or example of the present invention. In the present specification, a schematic representation of the above terms does not necessarily refer to the same embodiment/example. Moreover, those skilled in the art can combine different embodiments /examples, and combine the features from different embodiments/examples, which are described in the present specification, as long as there is no contradiction.

In addition, the term "connection" should be understood in a broad sense, for example, the term "connection" may be a fixed connection, a detachable connection or an integrated connection; the term "connection" may be a direct connection, an indirect connection through an intermediate medium, or an internal communication between two elements. For those skilled in the art, the meanings of the above terms in the present invention can be understood according to the detailed situations.

In addition, the terms "first" and "second" are used for descriptive purposes only, and should not be understood as indicating/implying relative importance or implicitly indicating the number of the indicated technical features. Therefore, a feature defined as "first" and "second" may explicitly or implicitly include at least one feature. In the description of the present invention, "multiple" means at least two, such as two, three, etc., unless otherwise clearly or specifically defined.

Any flowchart, or any process or any method described herein may be interpreted as including one or more modules, fragments or portions containing the code of executable instructions for implementing the logical functions or the steps of a process. And the scope of the preferred embodiments of the present invention also includes alternative implementations in which functions are not performed in the order as shown or discussed, but performed in a substantially simultaneous manner or in a reverse order, depending on the functions involved. This should be understood by those skilled in the technical field to which the embodiments of the present invention belong.

Although some embodiments of the present invention have been shown and described above, it should be understood that the above embodiments are exemplary and cannot be understood as a limitation to the present invention, and those skilled in the art can make changes, modifications, substitutions and variations to the above embodiments within the scope of the present invention.

## Claims

1. An air pump device, wherein the air pump device comprises:
an energy storage unit;
a power connection terminal, configured to be connected to an external power supply;
an air pump, which is connected to the energy storage unit and is connected to the power connection terminal, so that the energy storage unit and/or the external power supply is able to power the air pump.

2. The air pump device according to claim 1, wherein the power connection terminal is connected to the external power supply, and the external power supply at least includes a vehicle battery, wherein the vehicle battery is configured to be connected to a vehicle cigarette lighter so as to be connected to the power connection terminal, or the vehicle battery is configured to be connected to the power connection terminal.

3. The air pump device according to claim 1, wherein the energy storage unit is able to power the air pump; when the power connection terminal is connected to the external power supply, the energy storage unit and/or the external power supply is able to power the air pump.

4. The air pump device according to claim 1, wherein the air pump device further comprises a charging module, which is provided between the energy storage unit and the power connection terminal; when the external power supply is connected to the power connection terminal, the external power supply is able to charge the energy storage unit through the charging module.

5. The air pump device according to claim 1, wherein the air pump device further comprises a controller, wherein a controlling terminal of the controller is configured to be connected to a controlled terminal of the air pump, and the controller is configured to control the the air pump to start or to stop.

6. The air pump device according to claim 5, wherein the air pump device further comprises a detection module, the detection module is configured to detect/measure a voltage of the energy storage unit and a voltage at the power connection terminal, and the controller is configured to control the the air pump to start or to stop, based on a detection result of the detection module.

7. The air pump device according to claim 6, wherein when the detection module detects that the voltage of the energy storage unit exceeds a first preset voltage, the controller is able to control the air pump to start, and to enable the energy storage unit to power the air pump.

8. The air pump device according to claim 6, wherein when the detection module detects that the voltage at the power connection terminal exceeds a second preset voltage, the controller is able to control the air pump to start, and to enable the external power supply, which is connected to the power connection terminal, to power the air pump.

9. The air pump device according to claim 6, wherein when the detection module detects that the voltage of the energy storage unit is lower than the first preset voltage, and the voltage at the power connection terminal is lower than a second preset voltage, the controller is able to control the air pump to stop working.

10. The air pump device according to claim 5, wherein the air pump device further comprises a control button; when the control button is triggered, a button trigger signal is output to the controller, so that the controller is able to control the air pump to start or to stop.

11. The air pump device according to claim 5, wherein the air pump device further comprises a switch unit; the controller is configured to control the switch unit to be on or off, so as to control the air pump to start or to stop.

12. The air pump device according to any one of claims 1-11, wherein the air pump device further comprises a load connection terminal, which is configured to be connected to a load, wherein the load includes at least one selected from a starting device and a vehicle battery.

13. A multifunctional apparatus, wherein the multifunctional apparatus comprises:
an air pump;
a load connection terminal, which is configured to be connected to a load, wherein the load comprises at least one selected form a starting device and a vehicle battery;
an energy storage module, which is able to supply power to the air pump and/or to the load connection terminal.

14. The multifunctional apparatus according to claim 13, wherein the multifunctional apparatus further comprises a controller, which is configured to control the energy storage module to supply power to the air pump and/or to the load connection terminal.

15. The multifunctional apparatus according to claim 14, wherein the multifunctional apparatus further comprises a detection circuit for energy storage module, which is configured to detect/measure a voltage of the energy storage module; when the voltage detected by the detection circuit for energy storage module is lower than a first preset voltage, the controller is configured to control the energy storage module to stop supplying power.

16. The multifunctional apparatus according to claim 15, wherein the multifunctional apparatus further comprises an alarm circuit; when the voltage detected by the detection circuit for energy storage module is lower than the first preset voltage, the alarm circuit is configured to output an alarm signal.

17. The multifunctional apparatus according to claim 15, wherein the multifunctional apparatus further comprises a load detection circuit, which is configured to detect/measure an electrical parameter of the load connection terminal; when the voltage detected by the detection circuit for energy storage module exceeds the first preset voltage, the controller is configured to determine a corresponding working mode based on a detection result of the load detection circuit, and to control the power supply from the energy storage module to the load connection terminal based on the corresponding working mode.

18. The multifunctional apparatus according to claim 17, wherein when the voltage detected by the load detection circuit exceeds a second preset voltage, the controller is able to control the power supply from the energy storage module to the load connection terminal according to a preset working mode.

19. The multifunctional apparatus according to claim 18, wherein when the voltage detected by the load detection circuit exceeds the second preset voltage, the controller is configured to control the energy storage module to supply power to the load connection terminal for a first preset duration.

20. The multifunctional apparatus according to claim 19, wherein the load detection circuit is further configured to detect/measure a current at the load connection terminal, and the controller is further configured to control the power supply from the energy storage module to the load connection terminal, based on the current detected by the load detection circuit.

21. The multifunctional apparatus according to claim 20, wherein after the first preset duration, if the current detected by the load detection circuit is less than a preset current, the controller is configured to control the energy storage module to stop supplying power to the load connection terminal.

22. The multifunctional apparatus according to claim 20, wherein after the first preset duration, if the current detected by the load detection circuit is greater than the preset current, the controller is configured to control the energy storage module to continue to supply power to the load connection terminal.

23. The multifunctional apparatus according to claim 21, wherein within a second preset duration since the energy storage module has stopped supplying power to the load connection terminal, if the voltage detected by the load detection circuit is less than a third preset voltage, the controller is configured to exit the preset working mode.

24. The multifunctional apparatus according to claim 21, wherein within a second preset duration since the energy storage module has stopped supplying power to the load connection terminal, if the voltage detected by the load detection circuit is greater than a third preset voltage, the controller is configured to, after the second preset duration, control the energy storage module to supply power again to the load connection terminal for the first preset duration.

25. The multifunctional apparatus according to claim 13, wherein the multifunctional apparatus further comprises a control button module, and the control button module is used for controlling the energy storage module to supply power or to stop supplying power to the air pump and/or to the load connection terminal.
